# EUROPÄISCHE PATENTSCHRIFT

(11) **EP 0 385 994 B1**
(45) Veröffentlichungstag und Bekanntmachung des Hinweises auf die Patenterteilung: **21.09.1994**
(21) Anmeldenummer: 88905663.6
(22) Anmeldetag: 29.06.1988
(51) Int. Cl.: F16N 11/10

(54) **EINRICHTUNG ZUM ZUFÜHREN VON FLÜSSIGEN VISKOSEN ODER GASFÖRMIGEN MEDIEN**
FEED DEVICE FOR FLUID, VISCOUS, OR GASEOUS MEDIA
AGENCEMENT D'AMENEE DE MILIEUX FLUIDES, VISQUEUX OU GAZEUX

(30) Priorität: 09.07.1987 DE 3722708
(43) Veröffentlichungstag der Anmeldung: 12.09.1990
(73) Patentinhaber: Satzinger GmbH & Co., 97717 Euerdorf (DE)
(72) Erfinder: JORISSEN, Bernd, D-8737 Euerdorf (DE)
(74) Vertreter: Andrejewski, Walter
(86) Internationale Anmeldenummer: DE8800389
(87) Internationale Veröffentlichungsnummer: WO8900657

(56) Entgegenhaltungen:
- DE-A- 3 131 105
- DE-B- 1 256 001
- DE-C- 1 119 384
- DE-C- 2 520 241
- US-A- 4 671 386

## Beschreibung

Die vorliegende Erfindung betrifft eine Einrichtung zum Zuführen von flüssigen, viskosen oder gasförmigen Medien nach dem Oberbegriff des Patentanspruches 1.

Eine derartige Einrichtung ist aus US-A-4 671 386 bekannt. Diese bekannte Einrichtung ist mit mehreren Schrauben ausgestattet, die als Schalter für elektrische Widerstände wirken. Dabei ist jedem Widerstand eine Schraube zugeordnet, durch deren Betätigung der jeweilige Widerstand im Stromkreis aktiviert wird. Eine stufenlose Gaserzeugung ist hierbei nicht möglich, vielmehr erfolgt die Gasmengenänderung in von den Widerständen vorgegebenen Stufen, wobei bei Erhöhung des Umgebungsdrucks eine größere Gasmenge erzeugt wird. Ein stufenloses Anpassen der erzeugten Gasmenge an die sie beeinflussenden Parameter läßt die bekannte Einrichtun somit nicht zu. Auch ist ein schnelles und leichtes Austauschen der Einzelteile der Einrichtung im Falle einer Beschädigung oder einer Erschöpfung nicht möglich. Bei der aus DE-B-12 56 001 bekannten Schmierbüchse, bei der ein dichtverschlossener Körper mit einer Vorrichtung zur Entwicklung von Gas vorgesehen ist, die im ausdehnbaren Körper einen Druck zum Ausdrücken von Schmierstoff aus einem Schmierstoffbehälter aufbaut, ist eine Unterbrechung der Gaserzeugung nicht ohne weiteres möglich. Schon gar nicht ist eine stufenlose Anpassung an geänderte Umgebungsbedingungen möglich. Dies kann auch bei der Schmierbüchse gemäß DE-C-25 20 241, bei der die Schmiermittelzufuhr mittels eines Schalters jederzeit an- und abgestellt werden kann, nicht erreicht werden. Darüber hinaus haben diese bekannten Ausführungen den Nachteil, daß sie nicht regenerierbar sind. Die Schmierbüchsen müssen nach Entleerung des Schmierstoffbehälters oder bei Erschöpfung des elektrochemisch zersetzbaren Mediums weggeworfen werden.

Die Aufgabe der vorliegenden Erfindung besteht darin, eine Einrichtung der im Oberbegriff des Anspruches 1 angegebenen Art insoweit zu verbessern, daß unabhängig von Temperaturschwankungen und Zustand der Elektroden sowie des elektrochemisch zersetzbaren Mediums die.erzeugte Gasmenge konstant gehalten wird und daß ein schnelles Auswechseln der Teile des Stromkreises bzw. der Steuereinheit möglich ist. Weiterhin soll die Einrichtung so ausgebildet werden, daß sie entsprechend den jeweils unterschiedlichen Anforderungen aus einzelnen Teileinheiten aufgebaut werden kann, wobei diese Teileinheiten unabhängig voneinander regeneriert werden können.

Zur Lösung dieser Aufgabe sind bei der Erfindung die im kennzeichnenden Teil des Anspruches 1 angegebenen Merkmale vorgesehen. Durch die im Stromkreis vorgesehene Steuereinheit ist es einerseits möglich, einen ganz bestimmten Stromfluß einzustellen, der eine ganz bestimmte Gasmenge erzeugt, und andererseits diesen Stromfluß automatisch und unabhängig von den Außentemperaturen konstant zu halten sowie die Spannung zwischen den Elektroden entsprechend dem Zustand der Elektroden und des elektrochemisch zersetzbaren Mediums nachzuregeln. Die geteilte Ausbildung des abnehmbaren Aufsatzes ermöglicht ein schnelles Auswechseln erschöpfter oder beschädigter Teile. Das leichte Auswechseln wird auch dadurch begünstigt, daß der Aufsatz Kontaktbohrungen zum Eingriff von Kontaktstiften am Deckel des Behälters zur Ubertragung des Stroms an die Elektroden aufweist.

Der Stromkreis kann nach weiteren Merkmalen der Erfindung vom Netz oder einer Batterie gespeist werden, wobei bei Anschluß an das Wechsel- oder Gleichstromnetz ein Spannungsreduzierer und/oder ein Stromrichter und bei Verwendung einer Batterie als Stromquelle ein Spannungserhöher zugeschaltet werden kann.

Der Aufsatz kann die Zuleitung für die Stromversorgung - bei externer Stromquelle - oder auch die Batterie - bei Verwendung einer Batterie als Stromquelle - aufnehmen. Der Stromkreis kann beim Aufsetzen des Aufsatzes geschlossen werden, es ist aber auch möglich, zusätzlich einen Schalter im Stromkreis vorzusehen, der auch nach Aufsetzen des Aufsatzes jederzeit geschlossen oder geöffnet werden kann. In der Druckgaskammer kann in bekannter Weise ein mit elektrochemisch zersetzbarem Medium gefüllter ausdehnbarer Hohlkörper vorgesehen sein, dem ein Trenneinsatz oder Trennkolben vorgeschaltet ist. Das elektrochemisch zersetzbare Medium kann dabei auch flüssig sein. Auch ist es möglich, einen mit elektrochemisch zersetzbaren Medium getränkten Filz oder sonstigen porösen Körper zur Aufnahme des elektrochemisch zersetzbaren Mediums vorzusehen. Die Elektroden können unterschiedlich, z. B. als Stiftelektroden, als durch einen Isolator getrennte Scheiben oder bei Verwendung eines in einem porösen Körper enthaltenen elektrochemisch zersetzbaren Mediums als diesen Körper berührende Scheiben ausgebildet sein. Die Elektroden können aus Metall, Kohlenstoff, Halbleiter oder metallisiertem Kunststoff usw., gefertigt werden.

In dem die Druckgaskammer aufnehmenden Behälter, kann gleichzeitig auch die das zu fördernde Medium enthaltende Kammer angeordnet sein, es besteht aber auch die Möglichkeit diese in einem getrennten oder trennbaren Behälter unterzubringen. Durch die Ausbildung des von dem Behälter mit der Druckgaskammer abnehmbaren Aufsatzes, der die Steuereinheit und ggf. die Stromquelle enthält, besteht zum einen der Vorteil, daß die Teile während des Transportes oder der Lagerung getrennt behandelt werden können, also keine Gefahr besteht, daß die Einrichtung unbeabsichtigt zu arbeiten beginnt und zum anderen läßt sich dieser Aufsatz mit Behältern unterschiedlicher Größe und Inhalte kombinieren.

Je nach Verwendung ist es auch möglich, die Teile des Aufsatzes teilweise oder auch vollständig in den Behälter (1) zu integrieren. Auch ist eine andere Komponentenzusammenfassung zum Zwecke der Trennung und so zur Wiederverwendung, Regeneration, zu anderen Kombinationen, usw. möglich.

Die Vorratshaltung und auch die Nachrüstung ist somit wesentlich erleichtert, weil die Teile austauschbar, nachfüllbar und regenerierbar sind.

Es ist eine Reihe von zusätzlichen Schalt- und Kontrolleinrichtungen, wie Zeitschalter, Amperemeter zur Anzeige des Stromes im Stromkreis, Ladekontrolleinrichtung zur Bestimmung des Ladezustandes, Anzeigevorrichtung für die erzeugte Gasmenge und/oder für die Restmenge des zu fördernden Mediums usw. möglich, auf die nicht näher eingegangen werden soll, die aber alle die Überwachung der Funktion der Einrichtung ermöglichen.

Es ist auch möglich durch Erzeugung geeigneter Gase diese zur Regeneration des Gaserzeugers wieder in ihren Urzustand zurückzuführen. So wäre der Gaserzeuger für lange Zeit, ohne Austausch des elektrochemisch zersetzbaren Mediums verwendbar.

Die Einsatzmöglichkeiten der erfindungsgemäßen Einrichtung sind vielseitig. So kann damit ein Spendesystem zur Rußreduzierung am Dieselmotor geschaffen werden, wobei in die Zuführleitung für den Dieseltreibstoff beim Starten des Motors oder auch während des gesamten Betriebes ein Rußminderer mit Hilfe der erfindungsgemäßen Einrichtung eingespritzt wird.

Die Gamenge und damit die Menge des Rußminderers, kann dabei in Abhängigkeit von verschiedenen Parametern über die Steuereinheit geregelt werden.

Diese Regelung kann in der Einrichtung vorprogrammiert sein, oder vom Benutzer selbst eingestellt werden. Auch kann diese Regelung über ein zentrales Steuerpult erfolgen.

Weitere Einsatzmöglichkeiten sind gegeben, es wird jedoch nicht näher darauf eingegangen. Erwähnt soll nur der mögliche Einsatz zur Schmierung von Lagerteilen werden. Die Erfindung soll nachstehend anhand der in den Zeichnungen dargestellten Ausführungsbeispiele näher beschrieben werden.

Es zeigen:
- Fig. 1: die erfindungsgemäße Einrichtung in ein System zur Rußminderung bei Dieselmotoren eingebaut.
- Fig. 2: einen Querschnitt durch den Aufsatz mit der Steuereinheit
- Fig. 3: eine Draufsicht von unten auf das Oberteil des Aufsatzes nach Fig. 2
- Fig. 4: teilweise geschnitten den Behälter mit der Druckgaskammer und der Vorratskammer für das zu fördernde Medium
- Fig. 5 und 6: weitere Ausführungsbeispiele des elektrochemischen Systems in der Druckgaskammer.

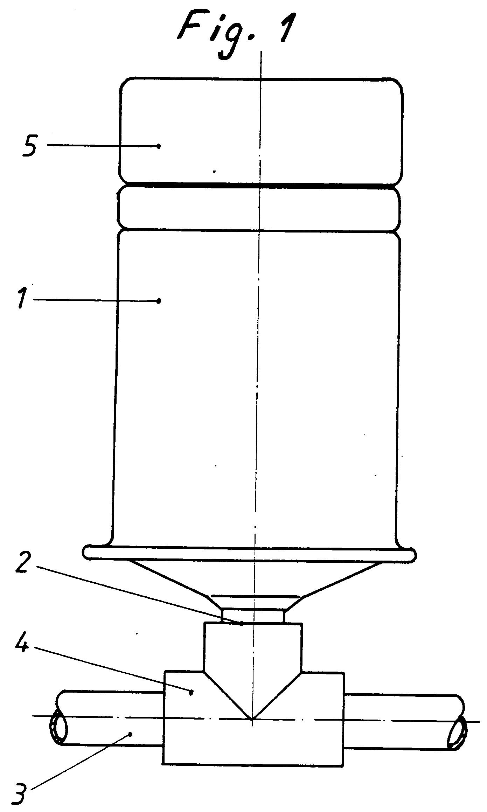

In Fig. 1 ist ein System zur Rußminderung bei Dieselmotoren dargestellt. Mit 1 ist der Behälter mit der Druckgaskammer und der Kammer zur Aufnahme des Rußminderers bezeichnet. Dieser Behälter 1 ist über einen mit Auslaßbohrung versehenen Gewindeansatz 2 mit der in der Kraftstoffleitung 3 eingesetzten Anschlußeinheit 4 verbunden. Im Auslaß sind entsprechende Einrichtungen eingebaut, z.B. Diaphragmen, Ventile usw., die ein unkontrolliertes Entleeren der Spendekammer aufgrund der wechselnden Druckverhältnisse und sonstigen Ereignissen in der Kraftstoffleitung verhindern. Auf den Behälter 1 ist der die Stromversorgung und die Steuereinheit enthaltende Aufsatz 5 aufgesetzt.

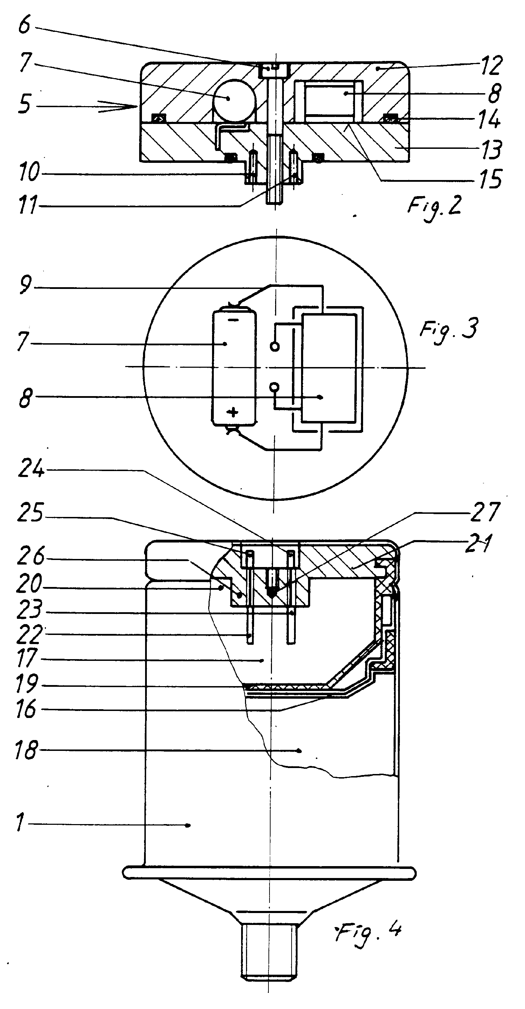

Der in Fig. 2 und 3 näher dargestellte Aufsatz 5, der über die Befestigungsschraube 6, oder dergleichen, mit dem Behälter fest verbunden werden kann, beinhaltet eine Batterie 7 zur Stromversorgung und die Steuereinheit 8, die in einem Stromkreis 9 miteinander verbunden sind. Der Stromkreis 9 endet in den beiden Kontaktbuchsen 10 und 11, die nach unten vorstehen. Um die Teile des Stromkreises 9 auswechseln zu können, ist der Aufsatz 5 geteilt ausgebildet, wobei die Teile 12 und 13 über mit einer Dichtung 14 abgedichteten Trennfläche 15 aneinander liegen.

Der Steuerkopf 5 könnte auch so ausgeführt sein, daß das Teil 13 entfällt. In diesem Fall wären die Kontaktbuchsen, Dichtungen usw. entsprechend zu ändern.

Der in Fig. 4 dargestellte Behälter 1 ist durch einen Trenneinsatz 16 in eine Druckgaskammer 17 und in eine Kammer 18 zur Aufnahme des zuzuführenden Mediums unterteilt. In der Druckgaskammer 17 ist ein ausdehnbarer Hohlkörper 19 angeordnet, in dem sich das elektrochemisch zersetzbare Medium 20 befindet. Am Deckel 21 des Behälters 1 ist der die Elektroden 22 und 23 tragende und zwei Stifte 24 und 25 zur Aufnahme der Kontaktbuchsen 10 und 11 des Aufsatzes 5 aufweisende Zapfen 26 befestigt, der gleichzeitig eine Gewindebohrung 27 besitzt, in die die Befestigungsschraube 6 des Aufsatzes 5 eingeschraubt werden kann.

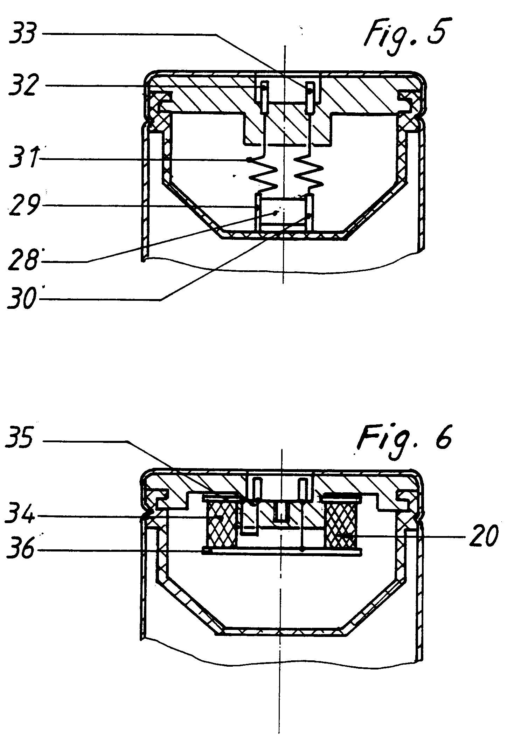

Anstelle der festen Elektroden 22 und 23 können wie in Fig. 5 dargestellt, zwei durch einen Isolator 28 getrennte Elektroden 29 und 30 vorgesehen werden, die über einen flexiblen, evtl. isolierten Draht 31 mit Kontaktstiften 32 und 33 im Deckel 21 des Behälters 1 verbunden sind, die in (nicht dargestellte) Buchsen im Aufsatz 5 eingreifen.

In Fig. 6 ist ein weiteres Ausführungsbeispiel des elektrochemischen Systems zur Gaserzeugung dargestellt. Das elektrochemisch zersetzbare Medium 20 wird von einem porösen Körper 34, z. B. aus Filz od. dgl. aufgenommen, an dessen Seitenflächen die Elektroden 35 und 36, die in geeigneter Weise in den Stromkreis eingebunden werden, angeordnet sind.

## Patentansprüche

1. Einrichtung zum Zuführen von flüssigen, viskosen oder gas förmigen Medien, wie z.B. Schmiermittel od. dgl., mit Hilfe eines in einer Druckgaskammer (17) auf elektrochemischem Wege erzeugten Druckgases, das das Medium aus einem Vorratsbehälter (18) ausdrückt, wobei in der Druckgaskammer (17) ein elektrochemisch zersetzbares Medium (20), zwei durch einen Stromkreis (9) miteinander verbindbare Elektroden (22, 23; 29, 30; 35, 36) und im Stromkreis (9) eine einen Regelkreis bildende Steuereinheit (8) vorgesehen sind, und die Steuereinheit (8), die die Gasmenge unbeeinflußt durch Parameterschwankungen einstellt, in einem von der Druckgaskammer (17) abnehmbaren Aufsatz (5) angeordnet ist, dadurch gekennzeichnet, daß die Steuereinheit (8) die Gasmenge unbeeinflußt durch Temperaturschwankungen und Zustand der Elektroden (22, 23; 29, 30; 35, 36) und des elektrochemisch zersetzbaren Mediums (20) konstant hält und daß der die Steuereinheit (8) aufnehmende Aufsatz (5) geteilt ausgebildet ist und Kontaktbohrungen (10, 11) zum Eingriff von Kontaktstiften (24, 25; 32, 33) am Deckel (21) des Behälters (1) zur Übertragung des Stroms an die Elektroden (22, 23; 29, 30; 35, 36) aufweist.

2. Einrichtung nach Anspruch 1, dadurch gekennzeichnet, daß der Stromkreis (9) eine Stromquelle (7) aufweist.

3. Einrichtung nach Anspruch 2, dadurch gekennzeichnet, daß der Stromkreis (9) am Wechsel- oder Gleichstromnetz angeschlossen ist und erforderlichenfalls einen Spannungsreduzierer oder Spannungserhöher und/oder Stromrichter aufweist.

4. Einrichtung nach Anspruch 2, dadurch gekennzeichnet, daß als Stromquelle eine Batterie (7) vorgesehen ist, der erforderlichenfalls ein Spannungserhöher zugeschaltet ist.

5. Einrichtung nach Anspruch 4, dadurch gekennzeichnet, daß die Batterie (7) im abnehmbaren Aufsatz (5) angeordnet ist.

6. Einrichtung nach einem der Ansprüche 1 bis 5, dadurch gekennzeichnet, daß in der Druckgaskammer (17) ein den elektrochemisch zersetzbaren Stoff (20) aufnehmender, ausdehnbarer Hohlkörper (19) vorgesehen ist, dem ein Trenneinsatz (16) od. dgl. vorgeschaltet ist.

7. Einrichtung nach einem der Ansprüche 1 bis 6, dadurch gekennzeichnet, daß der die Druckgaskammer (17) aufnehmende Behälter (1) gleichzeitig auch die Kammer (18) zur Aufnahme des zuzuführenden Mediums enthält.

8. Einrichtung nach Anspruch 7, dadurch gekennzeichnet, daß die Kammer (18) zur Aufnahme des zuzuführenden Mediums von der Druckgaskammer (17) trennbar ausgebildet ist.

## Claims

1. A device for supplying liquid, viscous or gaseous media, for example lubricants or the like, by means of a pressurised gas which is produced electrochemically in a pressurised gas chamber (17) and which expels the medium from a reservoir (18), wherein in the pressurised gas chamber (17) there are provided an electrochemically decomposable medium (20), two electrodes (22, 23; 29, 30; 35, 36) which can be connected to one another by a circuit (9) and a control unit (8) forming a control loop in the circuit (9), and the control unit (8), which adjusts the quantity of gas without being influenced by parameter fluctuations, is disposed in an attachment (5) which can be detached from the pressurised gas chamber (17), characterised in that the control unit (8) maintains the quantity of gas constant without be influenced by temperature fluctuations and condition of the electrodes (22, 23; 29, 30; 35, 36) and the electrochemically decomposable medium (20), and in that the attachment (5) accommodating the control unit (8) is formed divided and has contact bores (10, 11) for the engagement of contact pins (24, 25; 32, 33) on the cover (21) of the container (1) for transmitting current to the electrodes (22, 23; 29, 30; 35, 36).

2. A device according to Claim 1, characterised in that the circuit (9) has a power source (7).

3. A device according to Claim 2, characterised in that the circuit (9) is connected to the a.c. or d.c. mains and, if necessary, has a voltage step-down means or voltage step-up means and/or converter.

4. A device according to Claim 2, characterised in that a battery (7) is provided as the power source to which, if necessary, a voltage step-up means is connected.

5. A device according to Claim 4, characterised in that the battery (7) is disposed in the detachable attachment (5).

6. A device according to any one of Claims 1 to 5, characterised in that an expandable hollow body (19) accommodating the electrochemically decomposable substance (20) is provided in the pressurised gas chamber (17), a separating insert (16) or the like being disposed upstream of said hollow body.

7. A device according to any one of Claims 1 to 6, characterised in that the container (1) accommodating the pressurised gas chamber (17) simultaneously contains a chamber (18) for accommodating the medium to be supplied.

8. A device according to Claim 7, characterised in that the chamber (18) for accommodating to the medium to be supplied is designed to be separable from the pressurised gas chamber (17).

## Revendications

1. Dispositif d'alimentation de fluides liquides, visqueux ou gazeux, tels que, par exemple, lubrifiants ou similaires, à l'aide d'un gaz comprimé, produit de manière électrochimique dans une chambre à gaz comprimé (17), qui expulse le fluide d'un réservoir de stockage (18), dans la chambre à gaz comprimé (17) étant prévus un fluide décomposable électrochimiquement (20), deux électrodes (22, 23; 29, 30; 35, 36) reliées entre elles par un circuit de courant (9) et, dans le circuit de courant (9), une unité de commande (8) constituant un circuit de réglage et l'unité de commande (8) qui règle la quantité de gaz de manière non-influencée par les variations des paramètres étant disposée dans une applique (5) amovible de la chambre à gaz comprimé, caractérisé en ce que l'unité de commande (8) maintient la quantité de gaz constante sans être influencée par les variations de température et l'état des électrodes (22, 23; 29, 30; 35, 36) et du fluide décomposable électrochimiquement (20) et que l'applique (5) recevant l'unité de commande (8) se présente sous forme divisée et présente des alésages de contact (10, 11) destinés à l'engagement de broches de contact (24, 25; 32, 33) sur le couvercle (21) du réservoir (1) en vue de la transmission du courant aux électrodes (22, 23; 29, 30; 35, 36).

2. Dispositif suivant la revendication 1, caractérisé en ce que le circuit de courant (9) présente une source de courant (7).

3. Dispositif suivant la revendication 2, caractérisé en ce que le circuit de courant (9) est raccordé au réseau de courant alternatif ou de courant continu et présente, en cas de besoin, un réducteur de tension ou un survolteur et/ou un redresseur de courant.

4. Dispositif suivant la revendication 2, caractérisé en ce qu'il est prévu, comme source de courant, une pile (7) à laquelle est associée, en cas de besoin, un survolteur.

5. Dispositif suivant la revendication 4, caractérisé en ce que la pile (7) est disposée dans l'applique (5) amovible.

6. Dispositif suivant l'une des revendications 1 à 5, caractérisé en ce que dans la chambre à gaz comprimé (17) est prévu un élément creux (19) dilatable recevant la substance décomposable électrochimiquement (20), devant lequel est connecté un insert de séparation (16) ou similaire.

7. Dispositif suivant l'une des revendications 1 à 6, caractérisé en ce que le réservoir (1) recevant la chambre à gaz comprimé (17) contient en même temps également la chambre (18) destinée à recevoir le fluide à transporter.

8. Dispositif suivant la revendication 7, caractérisé en ce que la chambre (18) destinée à recevoir le fluide à transporter se présente sous forme séparable de la chambre à gaz comprimé (17).
